# EUROPÄISCHE PATENTSCHRIFT

(11) **EP 3 214 415 B1**
(45) Veröffentlichungstag und Bekanntmachung des Hinweises auf die Patenterteilung: **08.08.2018**
(21) Anmeldenummer: 16205647.7
(22) Anmeldetag: 21.12.2016
(51) Int. Cl.: G01D 21/00

(54) **EIN EINEN MIKROPROZESSOR UMFASSENDER SENSOR SOWIE VERFAHREN ZUM BEREITSTELLEN UND EINSPEISEN EINES SENSORSIGNALS IN EINEN INSTALLATIONSBUS EINER GEBÄUDEAUTOMATISIERUNGSEINRICHTUNG**
SENSOR COMPRISING A MICROPROCESSOR AND METHOD FOR PROVIDING AND FEEDING A SENSOR SIGNAL INTO AN INSTALLATION BUS OF A BUILDING AUTOMATION DEVICE
CAPTEUR COMPRENANT UN MICROPROCESSEUR ET PROCÉDÉ DE FOURNITURE ET D'INTRODUCTION D'UN SIGNAL DE CAPTEUR DANS UN BUS D'INSTALLATION D'UN DISPOSITIF D'AUTOMATISATION DE BÂTIMENT

(30) Priorität: 03.03.2016 DE 102016103782
(43) Veröffentlichungstag der Anmeldung: 06.09.2017
(73) Patentinhaber: Insta GmbH, 58509 Lüdenscheid (DE)
(72) Erfinder: Theis, Dirk, 58509 Lüdenscheid (DE); Levering, Dietmar, 58579 Schalksmühle (DE); Schönfeld, Christof, 58511 Lüdenscheid (DE)

(56) Entgegenhaltungen:
- WO-A1-2010/063747
- DE-A1-102008 027 221
- DE-U1-202006 006 134

## Beschreibung

Die Erfindung betrifft einen einen Mikroprozessor umfassenden Sensor zum Anschließen an den Installationsbus einer Gebäudeautomatisierungseinrichtung. Ferner betrifft die Erfindung ein Verfahren zum Bereitstellen und Einspeisen eines durch einen einen Mikroprozessor umfassenden Sensor generierten Signals in den Installationsbus einer Gebäudeautomatisierungseinrichtung.

Gebäudeautomatisierungseinrichtungen dienen zur Steuerung von in einem Gebäude befindlichen Aktoren, wie beispielsweise einer Heizungsanlage, einer Klimaanlage, einer Lichtsteuerung, einer Jalousiesteuerung und dergleichen. Die Aktoren sind an einen Installationsbus angeschlossen. Zum Ansteuern der Aktoren dienen Sensoren, beispielsweise manuell bedienbare, wie etwa Taster oder auch solche, die eine Gebäudezustandsgröße, wie etwa die Temperatur erfassen und in einen Regelkreis eingebunden sind, sodass unter Mitwirkung derartiger Sensoren die diesbezüglichen Aktoren, beispielsweise die Heizungs- und/oder Klimaanlage angesteuert werden. Ein oder mehrere Steuermodule werten die generierten Sensorsignale aus und steuern entsprechend die jeweiligen Aktoren an. An einen solchen Installationsbus können Schnittstellen, wie beispielsweise IP-Router angeschlossen sein, um einen Zugriff auf den Installationsbus von außen zu ermöglichen.

Sensoren, etwa Temperatursensoren, Helligkeitssensoren oder dergleichen benötigen für Ihren Betrieb eine Spannungsversorgung. Zudem müssen elektrische Anschlüsse bereitgestellt sein, über die die Sensorsignale in den Installationsbus eingebracht werden. Derartige Sensoren verfügen somit über vier Anschlussleitungen, wobei zwei dieser Anschlussleitungen für die Spannungsversorgung und zwei für die Signalübermittlung vorgesehen sind. Derartige Sensoren haben sich in der Praxis bewährt und sind für eine Gebäudeautomatisierungseinrichtung unverzichtbar. Bei der Planung einer Gebäudeautomatisierungseinrichtung ist allerdings von Anfang an darauf zu achten, an welchem Ort die Sensoren installiert werden sollen. Schließlich muss für eine Spannungsversorgung und für einen möglichen Anschluss an den Installationsbus gesorgt werden. Dieses ist insbesondere für einen nachträglichen Einsatz derartiger Sensoren oftmals hinderlich.

WO 2010/063747 A1 offenbart eine Schaltungsanordnung zum Ansteuern eines Sensors zur Erfassung eines Lenkwinkels, beispielsweise in einem Automobil. Kern der Offenbarung ist die Parallelschaltung eines Kondensators zu besagtem Sensor, um bei Ausfall des Bordnetzes eine ausreichend hohe Spannung für den Sensor bereitzustellen.

DE 20 2006 006 134 U1 offenbart ein Messsystem, welches eine Sensorleitung in Abhängigkeit von verschiedenen Ereignissen so schaltet, dass sie abhängig vom Schaltzustand der Schalteinheit als Fühlleitung zur Übertragung des Sensorsignals oder als Datenleitung zur Übertragung eines vom Sensorsignal verschiedenen Datensignals eingesetzt werden kann. Die Sensorleitung kann beispielsweise zur Übertragung eines Versorgungsspannungssignals oder als Datenleitung zur Übertragung eines Datensignals dienen. Durch eine solche Konfiguration können bei gleichbleibender Funktionalität Leitungen eingespart werden.

DE 10 2008 027 221 A1 offenbart eine Schaltungsanordnung für einen Sensor, mit der mithilfe einer Vergleichsspannung interne Parameter des Sensors aus dem Sensorausgangssignal ermittelt werden können.

Ausgehend von dem eingangs gewürdigtem Stand der Technik liegt der Erfindung die Aufgabe zugrunde, einen Sensor der eingangs genannten Art dergestalt weiterzubilden, dass vor allem der notwendige Anschlussaufwand vereinfacht ist. Des Weiteren liegt der Erfindung die Aufgabe zugrunde, ein Verfahren zum Betrieb eines solchen Sensors vorzuschlagen.

Gelöst wird diese Aufgabe erfindungsgemäß durch einen eingangs genannten, gattungsgemäßen Sensor, bei dem der Sensor zwei Anschlussleitungen umfasst und damit ausgelegt ist, an eine an den Installationsbus angeschlossene Tasterschnittstelle angeschlossen zu werden, über welche Tasterschnittstelle der Sensor die für seinen Betrieb notwendige Spannung bezieht, und bei dem der Sensor eine zusätzliche wiederaufladbare Spannungsquelle aufweist sowie über eine durch den Mikroprozessor ansteuerbare Schalteinrichtung zum Herbeiführen eines Kurzschlusses über die Anschlussleitungen als Signal zur Tasterschnittstelle verfügt, wobei der Sensor in den Kurzschlussphasen durch die zusätzliche Spannungsquelle spannungsversorgt ist.

Dieser Sensor verfügt nur über zwei Anschlussleitungen und kann daher als Zweileiter-Sensor angesprochen werden. Es versteht sich, dass die Masseleitung physisch nicht eine eigene Leitung darstellen muss, sondern dass dieser Anschluss auch anderweitig realisiert sein kann. Mit diesen Anschlussleitungen kann der Sensor an eine Tasterschnittstelle des Installationsbusses angeschlossen werden. Dieser Sensor nutzt für seinen Betrieb die über eine Tasterschnittstelle eines solchen Installationsbusses zur Verfügung gestellte Spannung. Zudem wird diese, sehr einfach konzipierte Schnittstelle für die Bus-fähige Signalgenerierung benutzt. Eine solche Tasterschnittstelle ist normalerweise ausgelegt, damit auf dieser ein Tastschalter - ein Taster - aufgesetzt wird, der dann z.B. zusätzlich über eine im Tastschalter integrierten LED den Signalzustand des Tastschalters anzeigt. Mittels des Tasters wird die Tasterschnittstelle zur Signalerzeugung kurzgeschlossen, was sodann das Bus-fähige Signal dieser Tasterschnittstelle darstellt. Erzeugt wird das Signal durch Betätigen des Tasters. Um Fehlschaltungen, insbesondere durch sogenanntes Prellen zu reduzieren bzw. gänzlich zu vermeiden, ist eine solche Tasterschnittstelle ausgelegt, damit ein Bus-Signal erst dann abgegeben wird, wenn eine vorgegebene Prellzeit (Schaltzeit) überschritten ist. Typischerweise ist die Prellzeit bei derartigen Tasterschnittstellen innerhalb gewisser Grenzen einstellbar. Bei anderen Schnittstellen ist diese fest vorgegeben. Die diesbezüglichen Prellzeiten liegen typischerweise im Bereich von 1 bis 255 ms.

Der erfindungsgemäße Sensor verfügt über eine wiederaufladbare Spannungsquelle, wobei gemäß einem bevorzugten Ausführungsbeispiel ein Kondensator als wiederaufladbare Spannungsquelle eingesetzt ist. Ein Kondensator ist in kürzester Zeit aufladbar und gibt die gespeicherte Spannung auch spontan ab. Eine solche wiederaufladbare Spannungsquelle ist für den Betrieb des Sensors erforderlich, um die elektrischen/elektronischen Komponenten des Sensors mit Spannung zu versorgen, wenn der Sensor ein Sensorsignal generiert. Ein Sensorsignal wird bei diesem Sensor durch einen geschalteten Kurzschluss zwischen den beiden Anschlussleitern erzeugt. Zu diesem Zweck verfügt der Sensor über eine entsprechende, von dem Mikroprozessor angesteuerte Schalteinrichtung. Die Schalteinrichtung ist typischerweise als Halbleiterschalter oder als Mikroprozessorausgang ausgeführt. Der Kurzschluss wird sensorseitig erzeugt, wenn ein Sensorsignal an den Installationsbus übermittelt werden soll. Da während der Kurzschlussphase der Mikroprozessor und eventuell andere spannungsgespeisten Komponenten des Sensors von der Spannungsversorgung aus der Tasterschnittstelle abgeschnitten sind, bezieht der Sensor zu seiner Spannungsversorgung während der Kurzschlussphasen seine Spannung aus der wiederaufladbaren Spannungsquelle, beispielsweise seines Spannungsversorgungskondensators. Durch eine Diode ist verhindert, dass bei dem Kurzschluss zur Tasterschnittstelle hin der Spannungsversorgungskondensator entladen wird. In den Nicht-Kurzschlussphasen wird die wiederaufladbare Spannungsquelle, also beispielsweise der Kondensator, geladen.

Die sensorseitig generierten Kurzschlussphasen sind länger als die aktuelle, also die vorgegebene oder eingestellte Prellzeit der Tasterschnittstelle. Ein Kurschlusssignal des Sensors, welches kürzer als die Prellzeit der Tasterschnittstelle ist, wird von dieser nicht als Schaltsignal erkannt. Aufgrund der geringen, durch die Tasterschnittstelle zur Verfügung gestellte Leistung (z.B. maximal 3V und 500µA) und der typischerweise Bauraum bedingt nur sehr geringen Größe der sensorseitigen wiederaufladbaren Spannungsquelle ist diese typischerweise nur dazu geeignet, die elektrischen/elektronischen Komponenten des Sensors kurzzeitig mit einer entsprechenden Leistung zu versorgen. Zum Erzeugen eines hinreichend langen sensorseitigen Schaltsignals wird dieses gemäß einer besonders bevorzugten Ausgestaltung daher durch eine Wechselfolge von Kurzschlussphasen und Nicht-Kurzschlussphasen mittels der sensorseitigen Schalteinrichtung bereitgestellt. Dabei sind die Kurzschlussphasen zeitlich länger bemessen als die Prellzeit der Tasterschnittstelle. Die Nicht-Kurzschlussphasen sind hingegen kürzer gewählt als die Prellzeit der Tastschnittstelle. Es ist ausreichend, wenn die Kurzschlussphasen um 5 bis 10 ms länger als die Prellzeit und die Nicht-Kurzschlussphasen entsprechend kürzer geschaltet werden. Bei einer solchen Schaltfolge von Kurzschlussphasen und Nicht-Kurschlussphasen sind für die Tasterschnittstelle die Nicht-Kurzschlussphasen, da kürzer als die Prellzeit, nicht erkennbar, weshalb Bus-seitig konstant ein Kurzschluss-Signal abgegeben wird, und zwar so lange wie die Schaltsignalfolge sensorseitig fortgesetzt wird.

Eine solche Schaltsignalfolge, wie vorbeschrieben, kann kurzzeitig oder auch langandauernd vorgenommen werden. Handelt es sich bei dem Sensor beispielsweise um einen Betauungs- oder Leckagesensor wird dieser die vorbeschriebene Wechselfolge schalten, so lange bis die sensorseitig erfasste Betauung bzw. Leckage beseitigt ist. Handelt es sich bei dem Sensor um einen Temperatursensor kann eine Schaltsignalfolge geschaltet werden, wenn eine bestimmte Temperatur als Schwellwerttemperatur über- oder unterschritten wird. Durchaus möglich ist es mit einem solchermaßen konzipierten Sensor auch, ein oder mehrere PWM-Signale (Pulsweitenmodulation) auszugeben, um auf diese Weise differenziertere Sensorsignale in den Installationsbus über die Tasterschnittstelle einzuspeisen. In einem solchen Fall ist die Software der Tasterschnittstelle hierfür entsprechend ausgelegt.

Nachfolgend ist die Erfindung anhand eines Ausführungsbeispiels unter Bezugnahme auf die beigefügten Figuren beschrieben. Es zeigen:
- **Fig. 1:**: Ein Blockschaltdiagramm eines erfindungsgemäßen Sensors angeschlossen an eine Tasterschnittstelle,
- **Fig. 2:**: Eine mit dem Sensor erzeugte Signalfolge und das daraus resultierende Signal einer Tasterschnittstelle,
- **Fig. 3:**: Eine schematisierte Darstellung einer weiteren Ausführung des Sensors der Figur 1 und
- **Fig. 3a**: Eine Unteransicht auf die Elektroden tragende Sensorplatte des Sensors der Figur 3.

Ein als Betauungssensor ausgelegter Sensor 1 umfasst einen Mikroprozessor 2. An den Mikroprozessor 2 sind zwei Messelektroden 3, 3.1 angeschlossen. Die Messelektroden 3, 3.1 sind jeweils kammartig ausgeführt, wobei die Zähne der kammartigen Ausführungen jeweils in die Zahnzwischenräume der anderen Elektrode 3.1, bzw. 3 eingreifen. Die Elektroden 3, 3.1 sind voneinander beabstandet und durch die Umgebungsluft voneinander elektrisch isoliert. Die beiden Messelektroden 3, 3.1 sind galvanisch von dem Mikroprozessor 2 und den übrigen elektrischen/elektronischen Bestandteilen des Sensors 1 getrennt. Eingesetzt ist für die galvanische Trennung jeder Elektrode 3, 3.1 jeweils ein durchschlagfester Kondensator 4, 4.1, typischer weise werden hierfür X- oder Y-Sicherheitskondensatoren verwendet. Die Elektroden 3, 3.1 sind auf einer Sensorfläche S angeordnet. Die Sensorfläche S ist beispielsweise die elektrisch isolierte Oberseite einer dünnen Aluminiumleiterplatte als Sensorplatte.

Der Sensor 1 verfügt des Weiteren über einen für eine temporäre Spannungsversorgung eingesetzten Spannungsversorgungskondensator 5. Der Spannungsversorgungskondensator 5 dient zum Verfügung stellen der zum Betrieb des Sensors 1 notwendigen Spannung (Leistung) für kurze Perioden, in denen der Sensor 1 die Leitungen 6 und 7 kurzschließt. Ein Entladen des Spannungsversorgungskondensators 5 wird durch die Diode D1 verhindert. Der Sensor 1 ist als Zweileiter-Sensor ausgelegt und verfügt über zwei Anschlussleitungen 6, 7. Die Anschlussleitung 6 dient zum Anschließen des Sensors 1 an eine komplementäre stromführende Leitung einer Stromversorgung, während die Anschlussleitung 7 die Masse- bzw. Erdleitung darstellt.

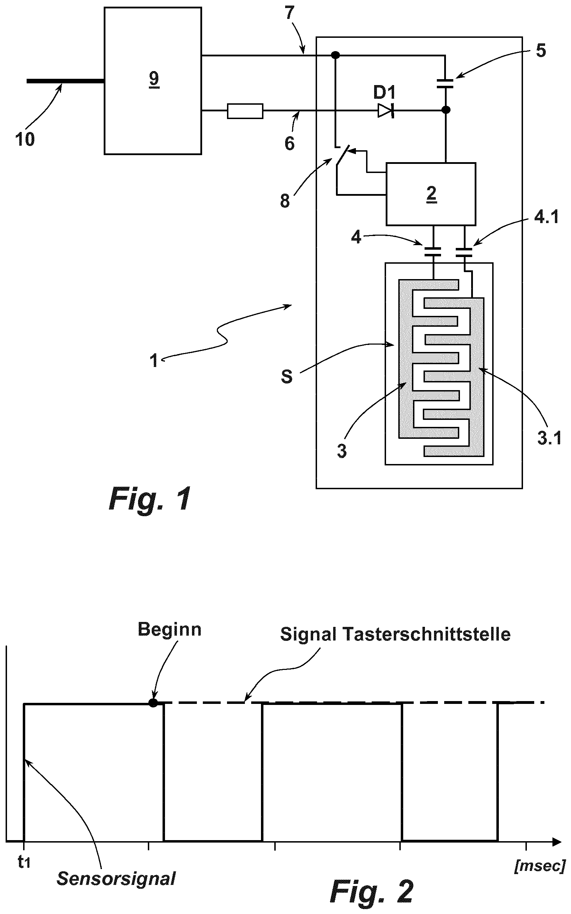

Von Besonderheit bei dem Sensor 1 ist eine Schalteinrichtung 8. Die Schalteinrichtung 8 ist durch den Mikroprozessor 2, wie in Figur 1 schematisiert angedeutet, ansteuerbar. Die Schalteinrichtung 8 ist als Schalter ausgelegt und dient dem Zweck, einen Kurzschluss über die Anschlussleitungen 6, 7 zu schalten. Bei geschlossener Schalteinrichtung 8 ist aufgrund des hergestellten Kurzschlusses eine Spannungsversorgung des Sensors 1 über seine Anschlussleitungen 6, 7 unterbrochen. Während einer solchen Kurzschlussphase bezieht der Mikroprozessor 2 seine Betriebsspannung aus dem Spannungsversorgungskondensator 5. Umgekehrt wird der Kondensator 5 in denjenigen Phasen, in denen die Schalteinrichtung 1 geöffnet ist, geladen. Da typischerweise die von dem Spannungsversorgungskondensator 5 zur Verfügung gestellte Spannung nur über einen kurzen Zeitraum hinweg zur Verfügung gestellt werden kann, ist der Betrieb des Sensors 1 ausgelegt, damit die Kurzschlussphasen nicht länger sind als die Zeitspanne ist, mit der der Sensor 1 durch seinen Spannungsversorgungskondensator 5 spannungsversorgt werden kann.

Der Sensor 1 ist mit seinen Anschlussleitungen 6, 7 ausgelegt, um an eine an einem Installationsbus angeschlossene Tasterschnittstelle angeschlossen zu werden. Schematisiert ist in Figur 1 eine Tasterschnittstelle 9 gezeigt. Der an die Tasterschnittstelle 9 angeschlossene Installationsbus 10 ist nur angedeutet. Bei dem Installationsbus 10 handelt es sich um einen Gebäudeinstallationsbus, an den zahlreiche Aktoren und weitere Sensoren neben zumindest einer Steuereinrichtung angeschlossen sind. Ein von der Tasterschnittstelle 9 in den Installationsbus 10 eingeprägtes Signal führt zur Ansteuerung eines Aktors. Die Tasterschnittstelle 9 dient dem Sensor 1 als Spannungsquelle. Im vorliegenden, beispielhaft betrachteten Anwendungsfall ist der Sensor 1 als Betauungssensor ausgelegt und an einem Wasserleitungsrohr befestigt. Im Falle einer Betauung sammeln sich kleine Wassertröpfchen auf der die Elektroden 3, 3.1 tragenden Sensorfläche S. Sobald eine elektrische Verbindung zwischen den beiden Elektroden 3, 3.1 durch die Betauungstropfen hergestellt ist, wird dieses von dem Mikroprozessor 2 des Sensors 1 detektiert. Über die Schalteinrichtung 8 wird sodann ein Signal generiert, dass ein Betauungsfall eingetreten ist. Als Aktor wird innerhalb des Gebäudeinstallationssystems entsprechend eine Kühl-Heizeinrichtung angesteuert, damit das in dem Rohr transportierte Wasser weniger gekühlt wird, um auf diese Weise den Betauungsfall zu beseitigen. Das für die Schalteinrichtung 8 erfolgte Signal bleibt solange geschaltet, bis der Betauungsfall beseitigt ist.

Erzeugt wird dieses Schaltsignal mit der Schalteinrichtung 8 des Sensors 1 in der nachfolgend beschriebenen Art und Weise:
Die Tasterschnittstelle 8 des dargestellten Ausführungsbeispiels ist auf eine Entprellzeit von 127,5 ms eingestellt. Zum Erzeugen des vorstehend beschriebenen Sensorsignals wird über den Mikroprozessor 2 die Schalteinrichtung 8 angesteuert, um einen Kurzschluss über die Anschlussleitungen 6, 7 bereitzustellen. Der Schalter der Schalteinrichtung 8 wird somit geschlossen. Da bei geschlossener Schalteinrichtung 8 die Spannungsversorgung des Mikroprozessors 2 über die Anschlussleitungen 6, 7 unterbrochen ist, bezieht dieser die für seinen Betrieb notwendige Spannung während der Kurschlussphase von dem Spannungsversorgungskondensator 5. Über den Spannungsversorgungskondensator 5 kann die Spannungsversorgung des Mikroprozessors 2 nur für eine beschränkte Zeit aufrecht erhalten werden. Um dennoch ein dauerhaftes Sensorsignal bereitstellen zu können, welches über die Dauer des Betauungszustandes auf der Sensorfläche S anhält, wird das Sensorsignal 1 als Signalpulsfolge generiert. Hierbei handelt es sich um eine Schaltfolge der Schalteinrichtung 8 zum Generieren einer Wechselfolge von Kurzschlussphasen und Nicht-Kurzschlussphasen. Diese Signalfolge ist in dem Diagramm der Figur 2 dargestellt. In Figur 2 ist der Zeitpunkt t₁ derjenige Zeitpunkt, in dem der Betauungsfall detektiert wird. Somit stellt der Zeitpunkt t₁ den Beginn einer ersten Kurzschlussphase dar. Diese erste Kurschlussphase wird bei dem dargestellten Ausführungsbeispiel für eine Dauer aufrecht erhalten, die etwas länger ist als die Entprellzeit der Tasterschnittstelle 9 ist und bei dem dargestellten Ausführungsbeispiel 135 ms beträgt. Diese Kurzschlussphase ist länger gewählt als die Entprellzeit der Tasterschnittstelle 9, damit die Tasterschnittstelle auf dieses Sensorsignal reagiert. Die Tasterschnittstelle 9 prägt ein Signal in den Installationsbus 10 ein, wenn die Dauer der Kurzschlussphase die Entprellzeit überschritten hat. In Figur 2 ist dieses mit "Beginn" in der Signalkurve der Tasterschnittstelle kenntlich gemacht. Während dieser Kurzschlussphase ist der Sensor 1 durch seinen Spannungsversorgungskondensator 5 spannungsversorgt. Diese erste Kurzschlussphase ist gefolgt von einer Nicht-Kurzschlussphase, in der die Schalteinrichtung 8 kurzzeitig geöffnet wird. Die Nicht-Kurzschlussphase dient dem Zweck, dem Spannungsversorgungskondensator 5 erneut aufzuladen. Während der Nicht-Kurzschlussphase ist der Mikroprozessor 2 über die Anschlussleitungen 6, 7 spannungsversorgt und der Spannungsversorgungskondensator 5 wird geladen. Die Nicht-Kurzschlussphase ist kürzer als die Entprellzeit der Tasterschnittstelle 9. Bei dem dargestellten Ausführungsbeispiel ist die Nicht-Kurzschlussphase mit 120 ms bemessen. Da die Nicht-Kurzschlussphase kürzer als die Entprellzeit der Tasterschnittstelle 9 ist, wird diese von der Tasterschnittstelle 9 nicht detektiert. Somit erhält die Tasterschnittstelle 9 von dem Sensor 1 eine Pulsfolge von Kurzschlussphasen mit jeweils einer Länge von 135 ms und Nicht-Kurzschlussphasen mit einer Länge von 120 ms. Bei der in der Tasterschnittstelle 9 eingestellten Entprellzeit von 127,5 ms stellt sich dieses von dem Sensor 1 empfangene Signal als dauerhaftes Kurzschlussphasen-Signal dar (in Figur 2 gestrichelt dargestellt), welches als solches in den Installationsbus 10 eingespeist wird. Ist der Betauungsfall behoben und sind damit die Elektroden 3, 3.1 über Tautropfen nicht mehr elektrisch verbunden, bleibt die Schalteinrichtung 8 geöffnet.

Seitens des Mikroprozessors 2 wird die Polarität der Elektroden 3, 3.1 in einer vorgegebenen Frequenz gewechselt bzw. umgekehrt. Dieses dient zur Vermeidung von Materialauslösungen aus dem Material der Elektroden.

Die Tasterschnittstelle 9 ist ausgelegt, um seitens des Sensors 1 in zeitlichen Abständen ein so genanntes Lebzeichen zu empfangen, wobei es sich bei diesem Signal um ein sehr kurzes Signal handelt. Bei dem dargestellten Ausführungsbeispiel ist vorgesehen, dass ein von dem Sensor 1 bereitgestelltes Signal durch Kurzschließen der Anschlussleitungen 6, 7 mit einer Dauer von etwa 15 ms als Lebzeichen erkannt wird. Ein solches Lebzeichen wird bei dem Sensor 1 des dargestellten Ausführungsbeispiels dann generiert, wenn kein Betauungsfall vorliegt. Es wird als ausreichend angesehen, wenn in einem solchen Fall alle 2 bis 5 s ein Lebzeichen abgesetzt wird. Die Pulslänge des Lebzeichensignals unterscheidet sich signifikant von der Entprellzeit, wie dieses in dem vorstehend beschriebenen Ausführungsbeispiel der Fall ist. Die Periode, mit der der Sensor ein Lebzeichensignal absetzt ist frei wählbar. Man wird diese Periode an die jeweils gewünschten Erfordernisse anpassen.

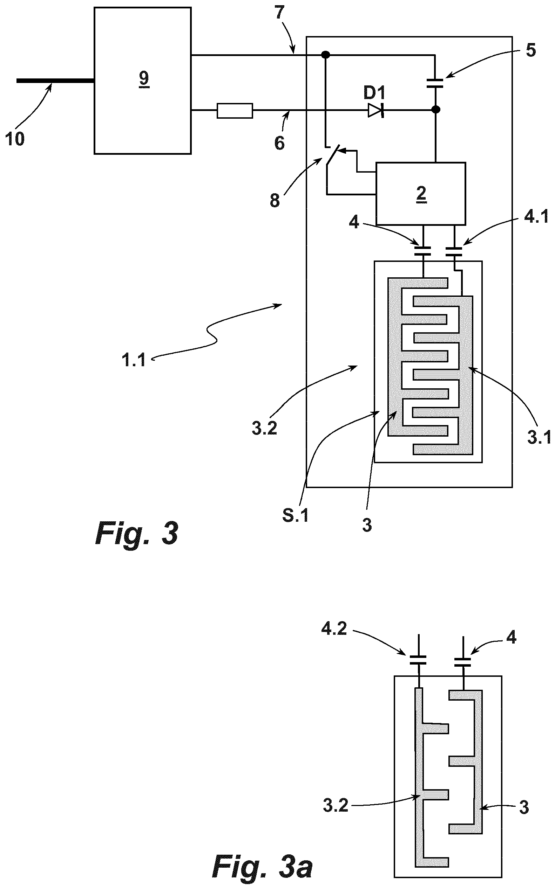

Figur 3 zeigt in einem weiteren Ausführungsbeispiel einen Sensor 1.1, der ebenso aufgebaut ist wie der Sensor 1 der Figur 1. Daher gelten die vorstehenden Ausführungen zu dem Sensor 1, seine Signalgenerierung und seinen Anschluss an eine Tasterschnittstelle gleichermaßen für den Sensor 1.1. Gleiche Bauteile bzw. Bauelemente sind daher bei dem Ausführungsbeispiel in Figur 3 mit gleichen Bezugszeichen wie zu dem Ausführungsbeispiel der Figur 1 gekennzeichnet. Der Sensor 1.1 verfügt neben den beiden Elektroden 3, 3.1 über eine weitere Elektrode 3.2. Auf der Sensorfläche S.1 der die Elektroden 3, 3.1, 3.2 tragenden Sensorplatte finden sich ebenso wie bei dem Ausführungsbeispiel in Figur 1 die Elektroden 3, 3.1. Von Besonderheit ist, dass die Elektrode 3 mit einer anderen Geometrie ebenfalls auf der Unterseite der Sensorplatte auf der unteren Sensorfläche angeordnet ist. Neben dieser Elektrode 3 ist auf der Unterseite der Sensorplatte die Elektrode 3.2 angeordnet. Der Abstand der Elektrode 3.2 von der Elektrode 3 an der Unterseite der Sensorplatte ist größer als zwischen den Elektroden 3, 3.1. Die Elektroden 3, 3.2 werden als Elektrodenpaar genutzt, um den Sensor 1.1 als Leckagesensor einsetzen zu können. Auch die Elektrode 3.2 ist zu ihrer galvanischen Trennung über einen durchschlagfesten Kondensator 4.2 an den Mikroprozessor 2 angeschlossen. Figur 3a zeigt eine Draufsicht auf die Unterseite der Sensorplatte mit der Anordnung der Elektroden 3 und 3.2.

Gemäß einer anderen Ausgestaltung ist vorgesehen, dass zu beiden Seiten einer solchen Sensorplatte Elektroden für eine Leckage- bzw. Betauungserfassung angeordnet sind. Die allgemeine Ausbildung derartiger Elektroden ist hinlänglich bekannt und braucht daher an dieser Stelle nicht näher erläutert zu werden.

Bei dem beschriebenen Ausführungsbeispiel des Sensors 1.1 wird bei der Herstellung desselben durch die jeweils anzuwendende Bestückung entschieden, ob der Sensor 1.1 als Betauungssensor oder Leckagesensor ausgebildet werden soll. Entschieden wird dieses durch die Bestückung des Sensors 1.1 mit seinen Sicherheitskondensatoren. Ist vorgesehen, dass der Sensor 1.1 als Betauungssensor eingesetzt werden soll, wird dieser nur mit den Sicherheitskondensatoren 4, 4.1 zum Anschließen der Elektroden 3, 3.1 an dem Mikroprozessor 2 bestückt. Bei einer solchen Ausgestaltung des Sensors 1.1 ist sodann der Sicherheitskondensator 4.2 nicht mit verbaut. Soll der Sensor 1.1 als Leckagesensor ausgelegt sein, werden hingegen die Sicherheitskondensatoren 4, 4.2 zum Anschließen der Elektroden 3, 3.2 an den Mikroprozessor verbaut und nicht der Sicherheitskondensator 4.1.

Durchaus möglich ist auch eine Ausgestaltung, bei der im Herstellungsprozess sämtliche Sicherheitskondensatoren 4, 4.1, 4.2 verbaut werden und anschließend der Mikroprozessor 2 programmiert wird, entweder die Elektrodeneingänge, an denen die Sicherheitskondensatoren 4, 4.1 oder die Sicherheitskondensatoren 4, 4.2 des anderen Elektrodenpaares angeschlossen sind, für die Messung zu verwenden.

Zur galvanischen Trennung zwischen den Elektroden 3, 3.1, 3.2 umfassenden Sensorfläche S bzw. S.1 und der übrigen Elektronik werden typischerweise X- oder Y-Sicherheitskondensatoren eingesetzt. Durch derartige Kondensatoren ist sichergestellt, dass ein Ausfall derselben nicht zu einem gefährdenden elektrischen Schlag führt. Je nach der zu erwartenden Impulsspitzenspannung im Betrieb wird man X1-, X2-, Y1- oder Y2-Kondensatoren einsetzen.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungen, um die Erfindung auch in anderen Sensoren einsetzen und verwirklichen zu können.

### Bezugszeichenliste

- 1, 1.1: Sensor
- 2: Mikroprozessor
- 3, 3.1, 3.2: Messelektrode
- 4, 4.1, 4.2: Sicherheitskondensator
- 5: Spannungsversorgungskondensator
- 6: Anschlussleitung
- 7: Anschlussleitung
- 8: Schalteinrichtung
- 9: Tasterschnittstelle
- 10: Installationsbus
- D1: Diode
- S, S.1: Sensorfläche

## Patentansprüche

1. Ein einen Mikroprozessor umfassender Sensor zum Anschließen an den Installationsbus (10) einer Gebäudeautomatisierungseinrichtung, wobei der Sensor zwei Anschlussleitungen (6, 7) umfasst und damit ausgelegt ist, an eine an den Installationsbus (10) angeschlossene Tasterschnittstelle (9) angeschlossen zu werden, über welche Tas.terschnittstelle (9) der Sensor (1, 1.1) die für seinen Betrieb notwendige Spannung bezieht, und dass der Sensor (1,1.1) eine zusätzliche wiederaufladbare Spannungsquelle (5) aufweist, wobei der Sensor (1, 1.1) in den Kurzschlussphasen durch die zusätzliche Spannungsquelle (5) spannungsversorgt ist, **dadurch gekennzeichnet, dass** der Sensor (1,1.1) über eine durch den Mikroprozessor (2) ansteuerbare Schalteinrichtung (8) zum Herbeiführen eines Kurzschlusses über die Anschlussleitungen (6,7) als Signal zur Tasterschnittstelle (9) verfügt.

2. Sensor nach Anspruch 1, **dadurch gekennzeichnet, dass** die zusätzliche Spannungsquelle ein Kondensator (5) ist.

3. Sensor nach Anspruch 1 oder 2, **dadurch gekennzeichnet, dass** der Sensor (1, 1.1) eine Signalerzeugungseinrichtung zum Erfassen einer im Rahmen einer Gebäudeautomatisierung zu verwenden Zustandsgröße umfasst.

4. Sensor nach einem der Ansprüche 1 bis 3, **dadurch gekennzeichnet, dass** die Signalerzeugungseinrichtung des Sensors (1, 1.1) ausgelegt ist, eine Betauung oder das Vorhandensein einer Flüssigkeit, insbesondere von Wasser, zu detektieren.

5. Sensor nach Anspruch 4, **dadurch gekennzeichnet, dass** die Signalerzeugungseinrichtung zum Erfassen eines Betauungszustandes oder des Vorhandeseins von Flüssigkeit, insbesondere von Wasser, zwei mit Abstand zueinander angeordnete Messelektroden (3, 3.1; 3, 3.2) umfasst und die Erfassung über eine Leitfähigkeitsmessung erfolgt.

6. Sensor nach Anspruch 5, **dadurch gekennzeichnet, dass** die Polarität zwischen den beiden Messelektroden (3, 3.1; 3, 3.2) über den Mikroprozessor (2) in einer vorgegebenen Frequenz umgekehrt wird.

7. Sensor nach einem der Ansprüche 3 bis 6, **dadurch gekennzeichnet, dass** die Messelektroden (3, 3.1, 3.2) durch Sicherheitskondensatoren (4, 4.1; 4, .2) galvanisch von der restlichen Elektronik des Sensors (1, 1.1) entkoppelt sind.

8. Sensor nach Anspruch 6, **dadurch gekennzeichnet, dass** zur galvanischen Trennung der Signalerzeugungseinrichtung durchschlagfeste Sicherheitskondensatoren (4, 4.1, 4.2) eingesetzt sind.

9. Sensor nach Anspruch 8 in seinem Rückbezug auf den Anspruch 5 oder 6, **dadurch gekennzeichnet, dass** jede Messelektrode (3, 3.1, 3.2) durch Zwischenschalten eines Sicherheitskondensators (4, 4.1, 4.2) an einem Eingang des Mikroprozessors (2) des Sensors (1, 1.1) angeschlossen sind.

10. Sensor nach einem der Ansprüche 5 bis 9, **dadurch gekennzeichnet, dass** die Signalerzeugungseinrichtung drei Elektroden (3, 3.1, 3.2) aufweist, wobei ein erstes Messelektrodenpaar (3, 3.1) ausgebildet und angeordnet ist, um einen Betauungszustand zu detektieren, während ein zweites Messelektrodenpaar (3, 3.2) zur Detektion des Vorhandenseins einer Flüssigkeit, insbesondere von Wasser, vorgesehen ist.

11. Sensor nach Anspruch 10, **dadurch gekennzeichnet, dass** die Signalerzeugungseinrichtung eine Sensorfläche aufweisende Sensorplatte aufweist, auf der die Messelektroden (3, 3.1, 3.2) angeordnet sind, und dass ein erstes Messelektrodenpaar auf der einen Seite der Sensorplatte und das andere Messelektrodenpaar auf der gegenüberliegenden Sensorfläche der Sensorplatte angeordnet sind.

12. Verfahren zum Bereitstellen und Einspeisen eines durch einen einen Mikroprozessor (2) umfassenden Sensor (1, 1.1) generierten - Signals in den Installationsbus (10) einer Gebäudeautomatisierungseinrichtung, **dadurch gekennzeichnet, dass** der Sensor (1, 1.1) zwei Anschlussleitungen (6, 7) aufweist und mit diesen an eine Tasterschnittstelle (9) des Installationsbusses (10) angeschlossen wird und dadurch die für seinen Betrieb notwendige Spannung aus der Tasterschnittstelle (9) bezieht und dass der Sensor (1, 1.1) als Signal einen Kurzschluss über seine Anschlussleitungen (6, 7) schaltet, wobei die Spannungsversorgung des Sensors (1, 1.1) während eines geschalteten Kurzschlusses über eine wiederaufladbare zusätzliche Spannungsquelle (5) erfolgt, die bei nicht geschaltetem Kurzschluss geladen wird.

13. Verfahren nach Anspruch 12, **dadurch gekennzeichnet, dass** zum Bereitstellen eines länger anhaltenden Sensorsignals eine Signalfolge aus wechselweise aufeinander folgenden Kurschlussphasen und Nicht-Kurzschlussphasen geschaltet wird, wobei die Dauer der Kurzschlussphasen länger und die Dauer der Nicht-Kurzschlussphasen kürzer als die Entprellzeit der Tasterschnittstelle (9) ist.

14. Verfahren nach Anspruch 12 oder 13, **dadurch gekennzeichnet, dass** die Entprellzeit der Tasterschnittstelle (9) auf ein mögliches Maximum eingestellt wird.

## Claims

1. A sensor comprising a microprocessor for connection to the installation bus (10) of a building automation unit, wherein the sensor has got two connection leads (6, 7) and thus is designed to be connected to a push-button interface (9) connected to the installation bus (10), via which push-button interface (9) the sensor (1, 1.1) draws the voltage necessary for its operation, and that the sensor (1, 1.1) has got an additional rechargeable voltage source (5), wherein during the short-circuit phases the sensor (1, 1.1) is supplied with voltage by the additional voltage source (5), **characterized by the fact** that the sensor (1, 1.1) has got a switching unit (8) controllable by the microprocessor (2) to generate a short-circuit via the connection leads (6, 7) as signal to the push-button interface (9).

2. Sensor in accordance with Claim 1, **characterized by the fact** that the additional voltage source is a capacitor (5).

3. Sensor in accordance to Claim 1 or 2, **characterized by the fact** that the sensor (1, 1.1) comprises a signal generation unit for detection of a state variable to be used in building automation.

4. Sensor in accordance with any of Claims 1 to 3, **characterized by the fact** that the signal generation unit of the sensor (1, 1.1) is designed to detect condensation or the existence of a liquid, especially water.

5. Sensor in accordance with claim 4, **characterized by the fact** that the signal generation unit for detection of condensation or the existence of a liquid, especially water, comprises two measuring electrodes (3, 3.1; 3, 3.2) arranged with space in between and the detection is effected by measuring the conductivity.

6. Sensor in accordance with claim 5, **characterized by the fact** that the polarity between the two measuring electrodes (3, 3.1; 3, 3.2) is reversed via the microprocessor (2) in a pre-determined frequency.

7. Sensor in accordance with any of Claims 3 to 6, **characterized by the fact** that the measuring electrodes (3, 3.1, 3.2) are electrically isolated from the remaining electronics of the sensor (1, 1.1) by safety capacitors (4, 4.1; 4, .2).

8. Sensor in accordance with Claim 6, **characterized by the fact** that for electrical isolation of the signal generation unit safety capacitors (4, 4.1, 4.2) are used, which are resistant to disruptive discharge.

9. Sensor in accordance with Claim 8 in its backreference to Claims 5 or 6, **characterized by the fact** that each measuring electrode (3, 3.1, 3.2) is connected to the input of the microprocessor (2) of the sensor (1; 1.1) by interconnection of a safety capacitor (4, 4.1, 4.2).

10. Sensor in accordance with any of Claims 5 to 9, **characterized by the fact** that the signal generation unit comprises three electrodes (3, 3.1, 3.2), wherein a first pair of measuring electrodes (3, 3.1) is designed and arranged to detect condensation, while a second pair of measuring electrodes (3, 3.2) is provided to detect liquids, especially water.

11. Sensor in accordance with Claim 10, **characterized by the fact** that the signal generation unit provides a sensor plate with sensor area, on which sensor plate the measuring electrodes (3, 3.1, 3.2) are arranged and that a first pair of measuring electrodes is arranged on one side of the sensor plate and the other pair of measuring electrodes is arranged on the opposite sensor area of the sensor plate.

12. Process for providing and feeding-in of a signal generated by a sensor (1; 1.1) comprising a microprocessor (2) into the installation bus (10) of a building automation unit, **characterized by the fact** that the sensor (1, 1.1) has got two connection leads (6, 7) and is connected by those to a push-button interface (9) of the installation bus (10) and thus gets the voltage necessary for its operation from the push-button interface (9) and that the sensor (1, 1.1) switches a short-circuit via its connection leads (6, 7) as signal, wherein during a switched short-circuit the voltage supply of the sensor (1, 1.1) is effected via a rechargeable additional voltage source (5), which is loaded when the short-circuit is not switched.

13. Process in accordance with Claim 12, **characterized by the fact** that for providing a longer lasting sensor signal, a signal sequence of alternating short-circuit phases and non-short-circuit phases is switched, wherein the length of the short-circuit phases is longer and the length of the non-short-circuit phases is shorter than the debouncing time of the push-button interface (9).

14. Process in accordance with any of Claims 12 or 13, **characterized by the fact** that the debouncing time of the push-button interface (9) is set to a possible maximum.

## Revendications

1. Un capteur comprenant un microprocesseur, destiné à être raccordé au bus d'installation (10) d'un dispositif d'automatisation domotique, le capteur comprenant deux lignes de raccordement (6, 7) et étant conçu pour être raccordé à une interface de bouton-poussoir (9) raccordée au bus d'installation (10), interface de bouton-poussoir (9) par l'intermédiaire de laquelle le capteur (1, 1.1) tire la tension nécessaire à son fonctionnement, et le capteur (1,1.1) présentant une source de tension supplémentaire rechargeable (5), le capteur (1, 1.1) étant, dans les phases de court-circuit, alimenté en tension par cette source de tension supplémentaire (5), **caractérisé en ce que** le capteur (1, 1.1) dispose d'un dispositif de commutation (8) pouvant être piloté par le microprocesseur (2) afin de provoquer un court-circuit par l'intermédiaire des lignes de raccordement (6, 7) à titre de signal pour l'interface de bouton-poussoir.

2. Capteur selon la revendication 1, **caractérisé en ce que** la source de tension supplémentaire (5) est un condensateur (5).

3. Capteur selon la revendication 1 ou 2, **caractérisé en ce que** le capteur (1, 1.1) comprend un dispositif générant un signal pour la saisie d'un paramètre d'état à utiliser dans le cadre d'une automatisation domotique.

4. Capteur selon l'une des revendications 1 à 3, **caractérisé en ce que** le dispositif de génération de signal du capteur (1, 1.1) est conçu pour détecter une formation de rosée ou la présence d'un liquide, en particulier la présence d'eau.

5. Capteur selon la revendication 4, **caractérisé en ce que** le dispositif de génération de signal pour la saisie d'un état de rosée ou pour la saisie de la présence d'un liquide, en particulier la présence d'eau, comprend deux électrodes de mesure (3, 3.1 ; 3, 3.2) placées espacées l'une de l'autre et que la saisie a lieu par une mesure de conductivité.

6. Capteur selon la revendication 5, **caractérisé en ce que** la polarité entre les deux électrodes de mesure (3, 3.1 ; 3, 3.2) est inversée par l'intermédiaire du microprocesseur (2) à une fréquence donnée.

7. Capteur selon l'une des revendications 3 à 6, **caractérisé en ce que** les électrodes de mesure (3, 3.1, 3.2) sont désolidarisées galvaniquement du reste du système électronique du capteur (1, 1.1) par des condensateurs de sécurité (4, 4.1; 4, .2).

8. Capteur selon la revendication 6, **caractérisé en ce que** ce sont des condensateurs de sécurité (4, 4.1, 4.2) rigides qui sont mis en oeuvre pour la séparation galvanique du dispositif de génération de signal.

9. Capteur selon la revendication 8 dans sa référence à la revendication 5 ou 6, **caractérisé en ce que** chaque électrode de mesure (3, 3.1, 3.2) est raccordée à une entrée du microprocesseur (2) du capteur (1, 1.1) par l'interposition d'un condensateur de sécurité (4, 4.1, 4.2).

10. Capteur selon l'une des revendications 5 à 9, **caractérisé en ce que** le dispositif de génération de signal présente trois électrodes (3, 3.1, 3.2), une première paire d'électrodes de mesure (3, 3.1) étant réalisée et placée pour détecter un état de rosée, tandis qu'une seconde paire d'électrodes de mesure (3, 3.2) est prévue pour la détection de la présence d'un liquide, en particulier la présence d'eau.

11. Capteur selon la revendication 10, **caractérisé en ce que** le dispositif de génération de signal présente une plaque de détection présentant une surface sensible, sur laquelle sont placées les électrodes de mesure (3, 3.1, 3.2), et **en ce que** une première paire d'électrodes de mesure est placée d'un côté de la plaque de détection et l'autre paire d'électrodes de mesure sur la surface sensible opposée de la plaque de détection.

12. Procédé de mise à disposition et d'introduction, dans le bus d'installation (10) d'un dispositif d'installation domotique, d'un signal généré par un capteur (1, 1.1) comprenant un microprocesseur (2), **caractérisé en ce que** le capteur (1, 1.1) présente deux lignes de raccordement (6, 7) et est raccordé à l'aide de celles-ci à une interface de bouton-poussoir (9) du bus d'installation (10) et tire ainsi de l'interface de bouton-poussoir (9) la tension nécessaire à son fonctionnement et **en ce que** le capteur (1, 1.1) cause un court-circuit par l'intermédiaire de ses lignes de raccordement (6, 7) à titre de signal, l'alimentation en tension du capteur (1, 1.1) ayant lieu, pendant la réalisation du court-circuit, par l'intermédiaire d'une source de tension supplémentaire (5) rechargeable, non chargée s'il n'y a pas court-circuit.

13. Procédé selon la revendication 12, **caractérisé en ce que** pour la mise à disposition d'un signal plus durable du capteur une suite de signaux constituée de phases alternantes successives de court-circuit et de non court-circuit est réalisée, la durée des phases de court-circuit étant plus longue et la durée des phases de non court-circuit plus courte que le temps de réponse de l'interface de bouton-poussoir (9).

14. Procédé selon la revendication 12 ou 13, **caractérisé en ce que** temps de réponse de l'interface de bouton-poussoir (9) est paramétré sur un maximum possible.
